# EUROPÄISCHE PATENTSCHRIFT

(11) **EP 3 708 837 B1**
(45) Veröffentlichungstag und Bekanntmachung des Hinweises auf die Patenterteilung: **21.08.2024**
(21) Anmeldenummer: 20163148.8
(22) Anmeldetag: 13.03.2020
(51) Int. Cl.: F04C 14/24, F16K 27/04, F16K 31/06

(54) **STEUERVENTIL MIT EINER ANSCHLUSSFLÄCHE FÜR MEHRERE VENTILPORTS**
CONTROL VALVE WITH A CONNECTION SURFACE FOR A PLURALITY OF VALVE PORTS
SOUPAPE DE COMMANDE DOTÉ D'UNE SURFACE DE RACCORDEMENT POUR UNE PLURALITÉ DE PORTS DE SOUPAPE

(30) Priorität: 15.03.2019 DE 102019106660
(43) Veröffentlichungstag der Anmeldung: 16.09.2020
(73) Patentinhaber: Wagner GmbH & Co. KG, 36043 Fulda (DE)
(72) Erfinder: Reinhard, Manuel, 36039 Künzell (DE)
(74) Vertreter: SSM Sandmair

(56) Entgegenhaltungen:
- EP-A1- 1 643 174
- EP-A2- 1 318 340
- DE-B3- 102016 112 412
- JP-B2- 6 209 139
- US-A1- 2003 127 143
- US-A1- 2004 099 314
- US-A1- 2011 168 930
- US-A1- 2015 218 983

## Beschreibung

Die Erfindung betrifft ein Steuerventil zur Steuerung einer Hydraulikeinrichtung. Die Hydraulikeinrichtung kann eine hydraulische Pumpe oder beispielsweise auch ein hydraulischer Motor oder anderer Aktuator sein. Bei einer Pumpe kann es sich um eine Schmierölpumpe für eine Brennkraftmaschine, wie etwa einen Antriebsmotor eines Kraftfahrzeugs, oder eine Getriebepumpe, beispielsweise für ein Automatikgetriebe eines Fahrzeugs oder ein Getriebe im Allgemeinen handeln, um nur Beispiele zu nennen. Der Fahrzeugbau, insbesondere Kraftfahrzeugbau, ist ein bevorzugtes Anwendungsgebiet der Erfindung. In vorteilhaften Ausführungen dient das Steuerventil der Verstellung des Fördervolumens einer Pumpe mittels eines Druckfluids.

In Fahrzeugen werden Pumpen, beispielsweise Schmierölpumpen und Getriebepumpen, oftmals vom Antriebsmotor in fester Beziehung zur Motorgeschwindigkeit, typischerweise zur Motordrehzahl, angetrieben. Handelt es sich um eine Verdrängerpumpe, steigt mit zunehmender Geschwindigkeit des antreibenden Motors auch die Pumpengeschwindigkeit und proportional hierzu das von der Pumpe geförderte Fördervolumen. Verdrängerpumpen fördern mit jedem Förderhub, d. h. pro Umdrehung eines drehbeweglichen Förderglieds einer Rotationspumpe oder pro Förderhub einer Pumpe mit hin- und hergehendem Förderglied, das gleiche Fördervolumen, das man auch als spezifisches Fördervolumen bezeichnet. Das Fördervolumen pro Zeiteinheit, d. h. die Förderrate, hängt daher bei Förderung ohne Gegendruck in guter Näherung linear von der Pumpengeschwindigkeit ab. Die Proportionalität von Pumpengeschwindigkeit und Fördervolumen pro Zeiteinheit ist oft störend. So wird beispielsweise eine Motorschmierölpumpe für einen kritischen Fall ausgelegt, im Allgemeinen der Heißleerlauf des zu schmierenden Motors. Die Pumpe fördert daher im unteren Drehzahlbereich des Motors und entsprechend geringer Pumpengeschwindigkeit bedarfsgerecht, im mittleren Motordrehzahlbereich fördert die Pumpe jedoch mehr, als der Motor benötigt. Das überschüssige Schmieröl wurde in früheren Jahren verlustbehaftet über einen Bypass in ein Schmierölreservoir abgeleitet. Die Problematik ist im Fahrzeugbau auch bei Getriebepumpen anzutreffen, wenn diese vom Fahrzeugmotor angetrieben werden. Man hat daher Pumpen entwickelt, die in ihrem spezifischen Fördervolumen verstellbar und dadurch unabhängiger von der Pumpengeschwindigkeit an den tatsächlichen Bedarf des zu versorgenden Aggregats angepasst werden können.

Im Fördervolumen verstellbare Pumpen sind beispielsweise aus der EP 1 847 713 B1 und der EP 3 103 960 A1 bekannt, um nur einige Beispiele von Pumpen zu nennen, für die ein erfindungsgemäßes Steuerventil Verwendung finden kann, um das spezifische Fördervolumen der jeweiligen Pumpe verstellen zu können.

EP1643174A1 offenbart ein Steuerventil nach dem Oberbegriff des Anspruchs 1.

In vielen Anwendungen, vor allem auch im Fahrzeugbau, ist der verfügbare Bauraum knapp bemessen. Für die Anordnung eines Steuerventils wird Bauraum jedoch nicht nur für das Steuerventil als solches benötigt, das Ventil muss auch an Fluidzu- und -abführungen angeschlossen werden, was zusätzlichen Bauraum benötigt. Das Anschließen erzeugt darüber hinaus auch Montageaufwand.

Es ist daher eine Aufgabe der Erfindung, ein Steuerventil zu schaffen, das wenig Bauraum benötigt und an vorhandene Fluidanschlüsse einfach und rasch angeschlossen werden kann. Gegenstand der Erfindung ist ein Steuerventil für eine Hydraulikeinrichtung, beispielsweise ein Motor oder insbesondere eine Pumpe. Das Steuerventil umfasst ein Ventilgehäuse mit einer Längsachse, einen Ventilkolben, der in einem Ventilraum des Ventilgehäuses axial zwischen einer ersten Kolbenposition und einer zweiten Kolbenposition hin und her beweglich ist, einen Druckport für die Zuführung eines Druckfluids in den Ventilraum, einen Arbeitsport zur Verbindung des Ventilraums mit einer Verstelleinrichtung der Hydraulikeinrichtung und einen Entlastungsport zur Druckentlastung des Ventilraums.

Das Steuerventil weist von außen betrachtet, das heißt über den äußeren Umfang des Steuerventils oder des Ventilgehäuses, eine Oberseite und eine Unterseite auf, die einander über eine virtuelle Längsschnittebene des Steuerventils abgewandt gegenüberliegen. Die Oberseite erstreckt sich nur über bzw. oberhalb der durch den Ventilraum erstreckten virtuellen Längsschnittebene, während sich die Unterseite nur unter bzw. unterhalb dieser Längsschnittebene erstreckt. Das Steuerventil kann in der Längsschnittebene, die das Steuerventil am äußeren Umfang in die Oberseite und die Unterseite unterteilt, quer zur Längsachse gemessen eine größte Breite aufweisen.

Das Ventilgehäuse weist an seinem äußeren Umfang an der Unterseite eine Anschlussfläche für den Anschluss des Steuerventils an eine Haltestruktur auf. Die Haltestruktur kann beispielsweise eine Gehäusestruktur eines Fahrzeugmotors oder eine andere Struktur eines Fahrzeugs oder beispielsweise auch ein Gehäuse der Hydraulikeinrichtung, wie etwa ein Pumpengehäuse, sein. Im montierten Zustand des Steuerventils bildet die Anschlussfläche des Steuerventils mit einer Anschlussgegenfläche der Haltestruktur einen Fügespalt. Das Steuerventil wird im montierten Zustand mit der Anschlussfläche in Richtung auf die Anschlussgegenfläche der Haltestruktur gespannt und vorzugsweise gegen die Anschlussgegenfläche gepresst. Anschlussfläche und Anschlussgegenfläche können im Fügespalt miteinander in einem Flächenkontakt sein. Grundsätzlich können sie sich über den Fügespalt aber auch in einem geringen Abstand gegenüberliegen.

Nach der Erfindung münden der Druckport, der Arbeitsport und der Entlastungsport jeweils an der Unterseite des Steuerventils an der Anschlussfläche, so dass das Steuerventil über die Anschlussfläche mit dem Druckfluid versorgbar, an die Hydraulikeinrichtung anschließbar und auch im Druck entlastbar ist. Sollte das Steuerventil einen oder mehrere weitere Ventilports aufweisen, beispielsweise einen weiteren Arbeitsport für eine weitere Verbindung mit der Hydraulikeinrichtung und/oder einen weiteren Entlastungsport, mündet vorteilhafterweise auch der jeweilige weitere Ventilport an der Anschlussfläche.

Im Vergleich zu herkömmlichen Steuerventilen, bei denen die genannten Ventilports typischerweise separat voneinander an die Fluidzuführung und Fluidabführung angeschlossen werden müssen, werden der für die Montage erforderliche Aufwand und der benötigte Bauraum reduziert. Zumindest die anspruchsgemäßen Ventilports werden über die gemeinsame Anschlussfläche als Einheit angeschlossen. Zu diesen Ventilports müssen Leitungen nicht mehr aus unterschiedlichen Richtungen zum Steuerventil geführt und am Steuerventil separat voneinander angeschlossen werden. Über die Anschlussfläche kann auch die Fügeverbindung mit der Haltestruktur geschaffen werden. Befestigung und Fluidanschluss des Steuerventils werden dadurch zusammengefasst. Das Steuerventil kann vorteilhafterweise mit seiner Unterseite an die Haltestruktur von der Seite her, mit der Anschlussfläche voran, angelegt und an der Haltestruktur befestigt werden, sodass die Anschlussfläche der Haltestruktur zugewandt, vorzugsweise mit der Haltestruktur in Kontakt ist.

Der Ventilkolben des Steuerventils weist einen ersten Kolbensteg und in axialem Abstand vom ersten Kolbensteg einen zweiten Kolbensteg auf., wobei der erste Kolbensteg einen Ventilsteuerraum mit einer ersten Kolbenstirnfläche und der zweite Kolbensteg den Ventilsteuerraum mit einer zweiten Kolbenstirnfläche axial begrenzen und diese zwei Kolbenstirnflächen unterschiedlich groß sind, so dass das Druckfluid im Ventilsteuerraum auf den Ventilkolben einen resultierenden axialen Druck ausübt.

Im Ventilraum des Steuerventils in dem Axialabschnitt, der bei den Bewegungen des Ventilkolbens vom zweiten Kolbensteg überstrichen wird, ist eine Hülse eingesetzt, die den Querschnitt des Ventilraums im betreffenden Axialabschnitt verengt, so dass sich der Verengung entsprechend am zweiten Kolbensteg die im Vergleich zur gegenüberliegenden ersten Kolbenstirnfläche kleinere zweite Kolbenstirnfläche ergibt.

Die Anschlussfläche kann von außen betrachtet rund gewölbt, konkav oder konvex, das Ventilgehäuse also im Bereich der Anschlussfläche eingebaucht oder ausgebaucht sein. Zweckmäßiger ist es jedoch, wenn die Anschlussfläche plan ist.

Das Ventilgehäuse kann an seinem äußeren Umfang einen Anschlussflansch aufweisen, mit dem es an der Haltestruktur montiert werden kann. In vorteilhaften Ausführungen bildet eine vom Ventilraum abgewandte freie Unterseite des Anschlussflansches die Anschlussfläche. Druckport, Arbeitsport und Entlastungsport münden in derartigen Ausführungen an der freien Unterseite des Anschlussflansches.

Das Steuerventil kann ein oder mehrere Befestigungselemente für die Befestigung an der Haltestruktur umfassen. Das jeweilige Befestigungselement kann am Ventilgehäuse geformt sein, insbesondere als ein Durchgang für ein Spannelement, mittels dem das Steuerventil zumindest im Wesentlichen orthogonal zur Anschlussfläche in Richtung Haltestruktur, vorzugsweise in einen Druckkontakt mit der genannten Anschlussgegenfläche, gespannt werden kann. Bei dem jeweiligen Spannelement kann es sich insbesondere um eine Befestigungsschraube zur Herstellung einer Schraubverbindung mit der Haltestruktur handeln. Das jeweilige Befestigungselement ist vorteilhafterweise nahe bei den an der Anschlussfläche mündenden Ventilports angeordnet.

Die an der Anschlussfläche mündenden Ventilports können axial nebeneinander aufgereiht an der Anschlussfläche münden. Die Anschlussfläche kann entsprechend axial lang gestreckt, beispielsweise rechteckförmig sein und eine axiale Länge aufweisen, die größer ist als eine in der Draufsicht quer hierzu gemessene Breite der Anschlussfläche.

Weist das Steuerventil den Anschlussflansch auf, so ist das Befestigungselement oder sind die vorzugsweise mehreren Befestigungselemente des Steuerventils in bevorzugten Ausführungen im oder am Anschlussflansch vorgesehen. Das jeweilige Befestigungselement kann insbesondere ein Durchgang, zweckmäßigerweise eine Durchgangsbohrung, durch den Anschlussflansch sein.

Ist die Anschlussfläche eine Fläche an der Unterseite eines Anschlussflansches, in oder an dem ein oder mehrere Befestigungselemente vorgesehen ist oder sind, kann der Anschlussflansch in Draufsicht auf die Anschlussfläche unmittelbar neben der Anschlussfläche eine oder mehrere flügelartige Ausbuchtungen aufweisen, beispielsweise eine Ausbuchtung pro Befestigungselement. Eine für den Anschluss einschließlich Befestigung, d. h. für den fluidischen und mechanischen Anschluss, vorgesehene Fügefläche an der Unterseite des Anschlussflansches kann auf diese Weise auf das Nötigste reduziert werden, wie etwa ausreichend Platz für eine oder mehrere Dichtungen bereitstellen, und an die Gegebenheiten am Einbauort, insbesondere an die Geometrie der Haltestruktur und in Bezug auf die Zugänglichkeit bei der Montage des Steuerventils, reduziert und optimiert werden.

Um die Ventilports von der äußeren Umgebung des Steuerventils und auch voneinander fluidisch zu trennen, kann eine Dichtungseinrichtung vorgesehen sein, die die Ventilports an der Anschlussfläche umgibt. Die Dichtungseinrichtung rahmt den Druckport, den Arbeitsport und den Entlastungsport in Draufsicht auf die Anschlussfläche jeweils dicht ein. Die Dichtungseinrichtung umfasst dementsprechend eine Druckport-Dichtung, eine Arbeitsport-Dichtung und eine Entlastungsport-Dichtung, wobei die jeweilige Dichtung den zugehörigen Ventilport in der Draufsicht umlaufend einrahmt. Mündet an der Anschlussfläche ein weiterer Ventilport, beispielsweise ein weiterer Arbeitsport, umfasst die Dichtungseinrichtung für diesen weiteren Ventilport eine weitere Dichtung, die den weiteren Ventilport an der Anschlussfläche in der Draufsicht umgibt und dabei dicht einrahmt.

Die Dichtungseinrichtung kann auf der Seite der Haltestruktur vorgesehen, beispielsweise an der Anschlussgegenfläche positioniert und gehalten sein. Bevorzugter ist die Dichtungseinrichtung jedoch Bestandteil des Steuerventils und dementsprechend am Steuerventil positioniert und gehalten. Hierfür können in der Anschlussfläche, die Ventilports umgebend Vertiefungen, insbesondere nutförmige Vertiefungen, geformt und die genannten Dichtungen der Dichtungseinrichtung in den Vertiefungen angeordnet sein.

Die Dichtungseinrichtung kann einteilig oder mehrteilig sein. In ersten Ausführungen ist die Dichtungseinrichtung einteilig, bildet also die Druckport-Dichtung, die Arbeitsport-Dichtung und die Entlastungsport-Dichtung sowie optional eine oder mehrere weitere Port-Dichtung(en) zusammenhängend als eine Dichtungseinheit. In mehrteiligen Ausführungen kann jeder Port-Dichtung als Einzeldichtung, separat von jeder anderen der Port-Dichtungen, verwirklicht sein. In nochmals anderen Ausführungen können beispielsweise zwei Port-Dichtungen, insbesondere Dichtungen für benachbarte Ports, als eine zusammenhängende Dichtungseinheit ausgeführt sein, während die hierzu dritte Port-Dichtung als Einzeldichtung bereitgestellt wird.

Das Steuerventil kann ein 3/2-Wegeventil oder insbesondere ein 3/3-Wegeventil mit Sperr-Mittelposition sein. Grundsätzlich kann das Steuerventil wie bereits erwähnt aber auch einen oder mehrere weitere Ventilports aufweisen, wobei der jeweilige weitere Ventilport vorteilhafterweise ebenfalls an der Anschlussfläche mündet.

Das Steuerventil ist in vorteilhaften Ausführungen als Elektromagnetventil ausgeführt. Es kann sich insbesondere um ein Proportionalventil handeln. Das als Elektromagnetventil ausgeführte Steuerventil weist eine Elektromagneteinrichtung mit einer bestrombaren Spule, einem mit der Spule gekoppelten Anker und einem mit dem Ventilkolben gekoppelten oder zwecks Einwirkung koppelbaren Steuerorgan auf. Das Steuerorgan kann zweckmäßigerweise mit dem Anker unbeweglich verbunden sein, alternativ kann es stattdessen aber grundsätzlich auch unbeweglich mit der Spule verbunden sein, falls diese zwecks Einwirkung auf den Ventilkolben beweglich ist.

Das Steuerventil kann insbesondere für die Anordnung im Motorraum eines Fahrzeugs vorgesehen sein.

Das Steuerventil wird in vorteilhaften Verwendungen zur gesteuerten Verstellung des Fördervolumens einer im Fördervolumen verstellbaren Pumpe verwendet. Bei der Pumpe kann es sich beispielsweise um eine Arbeitspumpe zur Förderung eines Arbeitsfluids, etwa zum Betreiben einer Zylinder-Kolben-Einrichtung mit hin und her beweglichem Kolben oder zum Betreiben eines hydraulischen Drehmotors handeln. In bevorzugten Verwendungen ist die Hydraulikeinrichtung eine im Fördervolumen verstellbare Schmierölpumpe zur Versorgung eines als Antriebsmotor eines Fahrzeugs dienenden Verbrennungsmotors mit Schmieröl oder eine Getriebepumpe für ein Getriebe (Schalt- oder Automatikgetriebe) eines Fahrzeugs (Kraftfahrzeug oder Elektrofahrzeug) oder ein anderes Getriebe.

Rotationspumpen mit verstellbarem Fördervolumen, wie sie die Erfindung insbesondere betrifft, umfassen einen Förderrotor, optional mehrere Förderrotoren, der oder die in einer Förderkammer eines Pumpengehäuses drehbeweglich angeordnet ist oder jeweils sind. Zur Verstellung des spezifischen Fördervolumens umfasst die jeweilige Pumpe ferner eine integrierte Verstelleinrichtung, die zur Verstellung des Fördervolumens mit dem oder den Förderrotoren mechanisch gekoppelt ist. Im Falle von innenachsigen Pumpen, wie etwa Flügelzellenpumpen und Innenzahnradpumpen, umfasst die Verstelleinrichtung ein Stellglied, das einen als Flügelrad oder inneres Zahnrad ausgebildeten Förderrotor umgibt und relativ zu dem Förderrotor hin und her beweglich ist, um eine Exzentrizität und dadurch das spezifische Fördervolumen zu verstellen. Bei einer Außenzahnradpumpe, als Beispiel für außenachsige Pumpen, sind wenigstens zwei als außenverzahnte Zahnräder gebildete Förderrotoren im Eingriff, wobei einer dieser Förderrotoren mittels des Stellglieds relativ zum anderen axial verschiebbar ist, um die Eingriffslänge der Förderrotoren und dadurch das spezifische Fördervolumen verstellen zu können. Das jeweilige Stellglied grenzt an eine Stellkammer und wird in die eine Richtung seiner Beweglichkeit mit einer vom Druck in der Stellkammer erzeugten hydraulischen Stellkraft und in die Gegenrichtung mit einer Rückstellkraft, beispielsweise einer permanent wirkenden Federkraft einer mechanischen Feder, beaufschlagt. Bei derartigen Pumpen wird das Steuerventil zur Steuerung des Drucks in der Stellkammer der Verstelleinrichtung verwendet.

Nachfolgend werden Ausführungsbeispiele der Erfindung anhand von Figuren erläutert. Anhand der Ausführungsbeispiele offenbarte Merkmale bilden jeweils einzeln und in jeder Merkmalskombination die Gegenstände der Ansprüche, der vorstehenden Aspekte und auch der vorstehend zusätzlich erläuterten Ausführungen vorteilhaft weiter. Es zeigen:
- Figur 1: ein Steuerventil eines ersten Ausführungsbeispiels in einem Längsschnitt,
- Figur 2: das Steuerventil des ersten Ausführungsbeispiels in einer Draufsicht auf eine Oberseite,
- Figur 3: ein Steuerventil eines zweiten Ausführungsbeispiels in einem Längsschnitt,
- Figur 4: das Steuerventil des zweiten Ausführungsbeispiels in einer Draufsicht auf eine Unterseite,
- Figur 5: eine Haltestruktur für die Steuerventile der Ausführungsbeispiele, und
- Figur 6: ein Schaltungsschema mit einer im Fördervolumen verstellbaren Pumpe und einem der Steuerung des Fördervolumens dienenden Steuerventil nach den Ausführungsbeispielen.

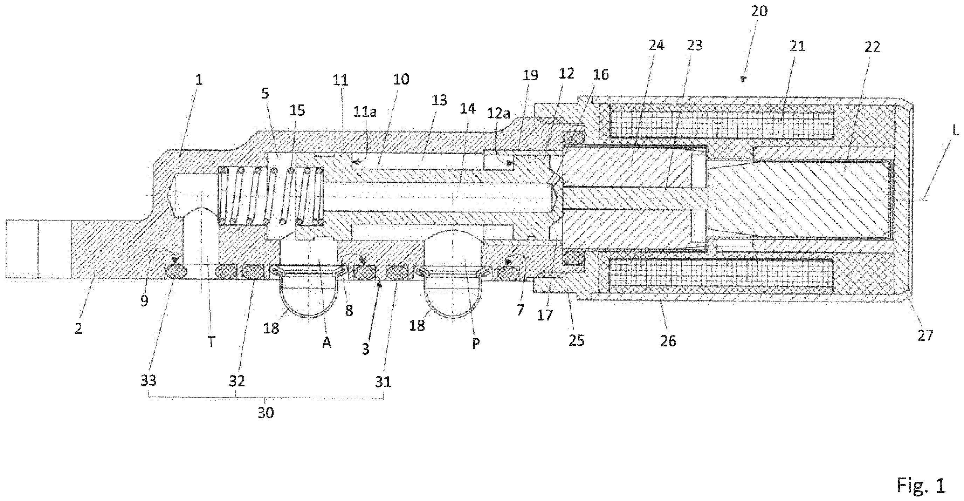

Figur 1 zeigt ein Steuerventil eines ersten Ausführungsbeispiels in einem Längsschnitt. Das Steuerventil umfasst ein Ventilgehäuse 1 mit einem axial erstreckten Ventilraum 5 und einem Ventilkolben 10, der im Ventilraum 5 längs einer Längsachse L zwischen einer ersten Kolbenposition und einer zweiten Kolbenposition axial hin und her beweglich ist. Eine im Ventilraum 5 aufgenommene Ventilfeder 15 spannt den Ventilkolben 10 mit Federkraft in Richtung auf die erste Kolbenposition. In Figur 1 nimmt der Ventilkolben 10 diese erste Kolbenposition ein.

Der Ventilkolben 10 weist an seinem äußeren Umfang einen radial vorragenden ersten Kolbensteg 11 und hierzu axial in einem Abstand einen radial vorragenden zweiten Kolbensteg 12 auf. Die Kolbenstege 11 und 12 begrenzen axial links und rechts einen um den äußeren Umfang des Ventilkolbens 10 erstreckten Ventilsteuerraum 13, der entsprechend der axialen Beweglichkeit des Ventilkolbens 10 im Ventilraum 5 axial hin und her verlagerbar ist.

Der Ventilkolben 10 ist ein Hohlkolben. Er weist einen axial erstreckten, zentralen Kolbenhohlraum 14 auf, der an einem der Ventilfeder 15 zugewandten axialen Ende in den Ventilraum 5 mündet.

Das Steuerventil ist als Elektromagnetventil ausgeführt. Es umfasst eine Elektromagneteinrichtung 20 mit einer bestrombaren Spule 21, einem relativ zur Spule 21 axial hin und her beweglichen Anker 22 und einem ebenfalls axial hin und her beweglichen Steuerorgan 23. Das Steuerorgan 23 bildet einen Stößel, über den der Anker 22 mit dem Ventilkolben 10 mechanisch gekoppelt ist. Die Elektromagneteinrichtung 20 ist dazu eingerichtet, den Ventilkolben 10 der Federkraft der Ventilfeder 15 entgegen und somit in Richtung auf die zweite Kolbenposition mit einer Stellkraft zu beaufschlagen.

Die Spule 21, der Anker 22 und das Steuerorgan 23 sind in einem Gehäuse der Elektromagneteinrichtung 20 angeordnet. Dieses Gehäuse umfasst eine Fügestruktur 25, mittels der die Elektromagneteinrichtung 20 mit dem Ventilgehäuse 1 gefügt ist, eine mit der Fügestruktur 25 fest verbundene Gehäusehülse 26, die die Funktionskomponenten 21, 22 und 23 umgibt, und einen Abschlussdeckel 27, der die Gehäusehülse 26 am vom Ventilkolben 10 abgewandten axialen Ende verschließt. Schließlich umfasst die Elektromagneteinrichtung 20 noch eine Führungsstruktur 24, die das Steuerorgan 23 axial beweglich führt und dafür sorgt, dass die Spule 21 und der Anker 22 fluidisch vom Ventilraum 5 getrennt sind.

An dem von der Ventilfeder 15 axial abgewandten Ende des Ventilkolbens 10 verbleibt im Ventilraum 5 axial zwischen dem Ventilkolben 10 und der Elektromagneteinrichtung 20 ein Entlastungsraum 17. Der Kolbenhohlraum 14 ist über einen oder mehrere durch den Ventilkolben 10 führende Verbindungskanäle 16 mit dem Entlastungsraum 17 verbunden. Der Entlastungsraum 17 kann unmittelbar an die äußere Umgebung des Steuerventils oder über eine Rückführleitung an ein Druckfluidreservoir angeschlossen sein.

Das Steuerventil weist einen Druckport P, einen Arbeitsport A und einen Entlastungsport T auf. Über den Druckport P ist das Steuerventil an eine Druckquelle anschließbar, so dass ein Druckfluid von dieser Druckquelle über den Druckport P in den Ventilraum 5 einleitbar ist. Über den Arbeitsport A kann das Steuerventil an eine Hydraulikeinrichtung angeschlossen werden, um die Hydraulikeinrichtung mit dem Druckfluid steuern zu können. Über den Entlastungsport T ist das Steuerventil, d. h. dessen Ventilraum 5, im Druck entlastbar. Das Steuerventil kann über den Entlastungsport T insbesondere an ein Reservoir für das Druckfluid angeschlossen werden. Findet das Steuerventil beispielsweise zur Steuerung des Fördervolumens einer in Bezug auf das Fördervolumen verstellbaren Schmierölpumpe Verwendung, kann der üblicherweise in Fahrzeugen vorhandene Ölsumpf das Druckfluidreservoir bilden.

Der Ventilkolben 10 ist, wie bereits erwähnt, zwischen zwei Kolbenpositionen, der ersten Kolbenposition und der zweiten Kolbenposition, axial hin und her beweglich. In Figur 1 nimmt der Ventilkolben 10 aufgrund der auf ihn ausgeübten Federkraft der Ventilfeder 15 die erste Kolbenposition ein. In der ersten Kolbenposition ist der Arbeitsport A vom Druckport P getrennt und über den Ventilraum 5 mit dem Entlastungsport T verbunden. Die erste Kolbenposition ist eine durch axialen Anschlagkontakt vorgegebene axiale Endposition des Ventilkolbens 10. In der ersten Kolbenposition ist der Ventilkolben 10 in einem axialen Anschlagkontakt mit der relativ zum Ventilgehäuse 1 axial unbeweglichen Führungsstruktur 24.

Mittels der Elektromagneteinrichtung 20 kann der Ventilkolben 10 in die zweite Kolbenposition bewegt werden. Die zweite Kolbenposition ist eine durch axialen Anschlagkontakt vorgegebene axiale Endposition. In der zweiten Kolbenposition ist der Ventilkolben 10 axial in einem Anschlagkontakt mit dem Ventilgehäuse 1. Nimmt der Ventilkolben 10 die zweite Kolbenposition ein, ist der Arbeitsport A über den Ventilsteuerraum 13 mit dem Druckport P verbunden und wird mittels des Kolbenstegs 11 vom Entlastungsport T getrennt.

In einer axial zwischen der ersten Kolbenposition und der zweiten Kolbenposition gelegenen Mittelposition, bei deren Einnahme der Kolbensteg 11 den Arbeitsport A zwar im Wesentlichen, aber nicht gänzlich verschließt, kann Leckagefluid von der Hydraulikeinrichtung über den Arbeitsport A und den Entlastungsport T gedrosselt abströmen.

Unabhängig von der mit der Elektromagneteinrichtung 20 ausübbaren Stellkraft wird der Ventilkolben 11 stets dann mit einer hydraulischen Stellkraft beaufschlagt, wenn der Druckport P unter Druck steht. Die hydraulische Stellkraft wirkt ebenfalls der Federkraft der Ventilfeder 15 entgegen, d. h. in Richtung auf die zweite Kolbenposition. Um die hydraulische Stellkraft zu erzeugen, begrenzen die Kolbenstege 11 den zwischen ihnen erstreckten Ventilsteuerraum 13 mit unterschiedlich großen Kolbenstirnflächen 11a und 12a. Die in die gleiche Richtung wie die Federkraft der Ventilfeder 15 gewandte Kolbenstirnfläche 11a ist größer als die gegen die Federkraft gerichtete Kolbenstirnfläche 12a. Der im Betrieb des Steuerventils im Ventilsteuerraum 13 herrschende Druck wirkt somit entsprechend der Flächendifferenz gegen die Federkraft der Ventilfeder 15 in Richtung auf die zweite Kolbenposition. Im Ausführungsbeispiel ist im Ventilraum 5 in dem Axialabschnitt, der bei den Bewegungen des Ventilkolbens 10 vom Kolbensteg 12 überstrichen wird, eine Hülse 19 eingesetzt, die den Querschnitt des Ventilraums 5 im betreffenden Axialabschnitt verengt, so dass sich der Verengung entsprechend am Kolbensteg 12 die im Vergleich zur gegenüberliegenden Kolbenstirnfläche 11a kleinere Kolbenstirnfläche 12a ergibt. Die Kolbenstirnflächen 11a und 12a sind der Größe nach in Anpassung an die Federsteifigkeit der Ventilfeder 15 und eine optionale Vorspannung der Ventilfeder 15 angepasst bemessen, so dass sich der Ventilkolben 10 aus der ersten Kolbenposition bis in die Mittelposition bewegt, wenn der im Ventilsteuerraum 13 herrschende Druck einen ersten Grenzdruck erreicht, und sich über die Mittelposition in die zweite Kolbenposition bewegt, wenn der Druck einen durch die Anpassung vorgegebenen zweiten Grenzdruck, der größer als der erste Grenzdruck ist, überschreitet.

Das Ventilgehäuse 1 weist an einer Unterseite einen Anschlussflansch 2 für den fluidischen und vorteilhafterweise auch mechanischen Anschluss des Steuerventils an einer Haltestruktur auf. Die Ventilports P, A und T münden an einer gemeinsamen Anschlussfläche 3 an der freien Unterseite des Anschlussflansches 2. Die Anschlussfläche 3 ist zweckmäßigerweise plan. Die Ventilports P, A und T erstrecken sich jeweils vom Ventilraum 5 radial zur Längsachse L bis zur Anschlussfläche 3. In der Anschlussfläche 3 sind um die Ventilports P, A und T jeweils umlaufend Vertiefungen geformt, wobei eine Vertiefung 7 den Druckport P, eine Vertiefung 8 den Druckport A und eine Vertiefung 9 den Entlastungsport T umgibt. In den Vertiefungen 7, 8 und 9 ist jeweils eine Dichtung angeordnet, nämlich eine Druckport-Dichtung 31, die den Druckport P dichtend umgibt, eine Arbeitsport-Dichtung 32, die den Arbeitsport A dichtend umgibt, und eine Entlastungsport-Dichtung 33, die den Entlastungsport T dichtend umgibt. Die Ventilport-Dichtungen 31, 32 und 33 sind voneinander separate Dichtringe, die an der Anschlussfläche 3 gemeinsam eine Dichtungseinrichtung 30 bilden, um die Ventilports P, A und T im montierten Zustand des Steuerventils von der äußeren Umgebung des Steuerventils und voneinander fluidisch zu trennen.

Der Druckport P und der Arbeitsport A sind jeweils mit einem Filter 18 bestückt, um den Schmutzpartikeleintrag über den Druckport P und den Schmutzpartikelaustrag über den Arbeitsport A zu reduzieren.

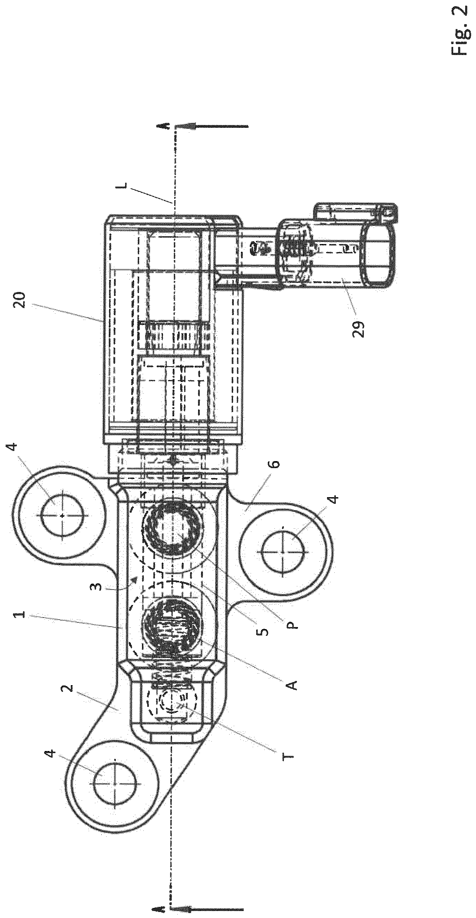

Figur 2 zeigt das Steuerventil des ersten Ausführungsbeispiels in einer Draufsicht auf die von der Anschlussfläche 3 abgewandte Oberseite. Die Unterseite des Anschlussflansches 2, an der sich die Anschlussfläche 3 erstreckt, ist verdeckt. Die Ventilports P, A und T und die Vertiefungen 7, 8 und 9 für die Dichtungseinrichtung 30 (Figur 1) sind daher strichliert dargestellt. Eingetragen ist auch der in Figur 1 dargestellte Längsschnitt A-A.

Die Anschlussfläche 3 ist entsprechend der Anordnung der Ventilports P, A und T längs der Längsachse L axial lang gestreckt. Sie überlappt in Längsrichtung und auch quer dazu in Breitenrichtung zumindest einen überwiegenden Teil des Ventilraums 5.

Über den Anschlussflansch 2 wird das Steuerventil am Einbauort, an der Haltestruktur, nicht nur fluidisch, sondern auch mechanisch angeschlossen, d. h. auch befestigt. Der Anschlussflansch 2 ist zum Zwecke der Befestigung mit mehreren Befestigungselementen 4 versehen, im Ausführungsbeispiel mit drei Befestigungselementen 4, die in der Draufsicht neben der zumindest primär dem Fluidanschluss dienenden Anschlussfläche 3 angeordnet sind. Die Befestigungselemente 4 werden in Form von Durchgängen, die sich von der Oberseite zur Unterseite des Anschlussflansches 2 erstrecken, bereitgestellt. Vorteilhafterweise erstrecken sich die Befestigungselemente 4 orthogonal zur Anschlussfläche 3. Die Befestigungselemente 4 sind in jeweils einer flügelartigen Ausbuchtung 6 des Anschlussflansches 2 geformt, wobei in einem axial zentralen Bereich des Steuerventils eine Ausbuchtung 6 mit einem Befestigungselement 4 zur einen Seite und eine weitere Ausbuchtung 6 mit einem weiteren Befestigungselement 4 zur anderen Seite der Anschlussfläche 3 abragen. Eine dritte Ausbuchtung 6 mit Befestigungselement 4 ragt in einem axialen Endbereich, nahe dem Entlastungsport T über die Anschlussfläche 3 hinaus vor. Die Bereitstellung von Befestigungselementen 4 im Bereich von flügelartigen Ausbuchtungen 6 ermöglicht eine platzsparende Bauweise des Steuerventils bei gleichzeitiger Anpassung an die geometrischen Verhältnisse am Einbauort.

Die Elektromagneteinrichtung 20 ist über einen Steuerungsanschluss 29 des Steuerventils ansteuerbar. Der Steuerungsanschluss 29 kann ein einfacher elektrischer Anschluss für eine Stromversorgung der Elektromagneteinrichtung 20 sein. Die Ansteuerung kann darin bestehen, dass die Spule 21 (Figur 1) der Elektromagneteinrichtung 20 wahlweise entweder bestromt oder nicht bestromt wird. Ist das Steuerventil wie bevorzugt ein Proportionalventil, kann die elektromagnetische Kraft stufenlos oder gegebenenfalls in mehreren Stufen verändert und der Ventilkolben 10 entsprechend stufenlos oder in Stufen axial in Richtung auf die zweite Kolbenposition bewegt werden. Über den Steuerungsanschluss 29 ist die Elektromagneteinrichtung 20 und somit das Steuerventil an eine übergeordnete Steuerung, beispielsweise eine Motorsteuerung, die insbesondere als Motorkennfeldsteuerung ausgeführt sein kann, anschließbar. Der Steuerungsanschluss 29 ist als elektrischer Steckanschluss ausgeführt.

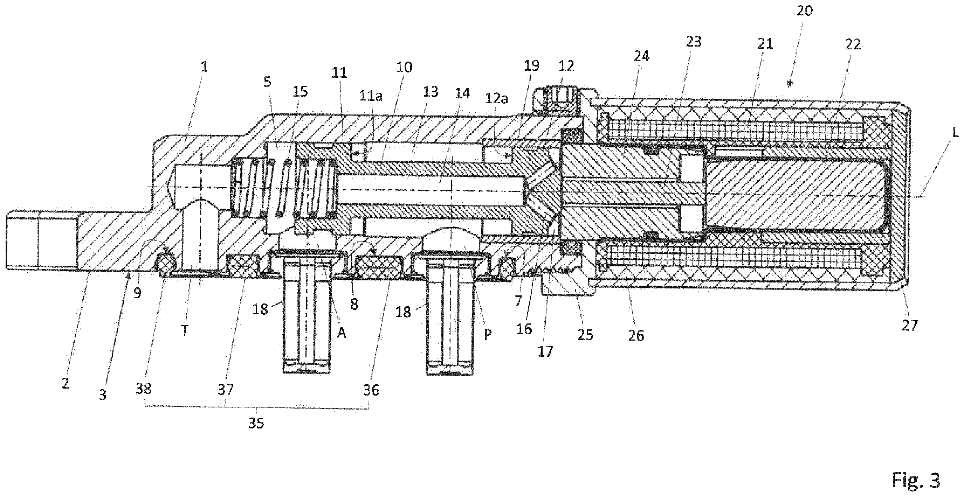

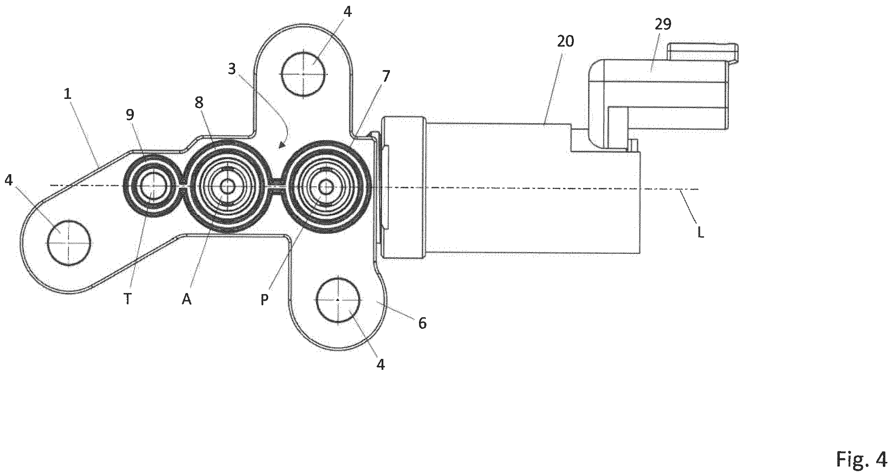

Die Figuren 3 und 4 zeigen ein Steuerventil eines zweiten Ausführungsbeispiels in einem ebenfalls zentralen Längsschnitt und in einer Draufsicht auf die Unterseite. Das Steuerventil des zweiten Ausführungsbeispiels unterscheidet sich vom Steuerventil des ersten Ausführungsbeispiels durch seine der Abdichtung der Ventilports P, A und T dienende Dichtungseinrichtung 35. Die Ventilport-Dichtungen sind zur Unterscheidung vom ersten Ausführungsbeispiel als Druckport-Dichtung 36, Arbeitsport-Dichtung 37 und Entlastungsport-Dichtung 38 bezeichnet. Die Ventilport-Dichtungen 36, 37 und 38 hängen zusammen, sind in einem Stück geformt und bilden die Dichtungseinrichtung 35 dementsprechend als eine Dichtungseinheit 35. Die Dichtungen 36, 37 und 38 sind wie im ersten Ausführungsbeispiel als Dichtringe ausgeführt, die im Unterschied zum ersten Ausführungsbeispiel jedoch über Verbindungsstege aus dem Dichtungsmaterial zur Dichtungseinheit 35 verbunden sind.

In Figur 4 sind die Ventilports P, A und T als solche und die sie umgebenden Vertiefungen 7, 8 und 9 für die Aufnahme der Dichtungseinheit 35 erkennbar. Die Vertiefungen 7, 8 und 9 sind in Anpassung an die Dichtungseinheit 35 über Vertiefungsabschnitte, die sich jeweils zwischen benachbarten Ventilports erstrecken, miteinander verbunden.

Von den vorstehend erläuterten Unterschieden hinsichtlich der als Dichtungseinheit 35 bereitgestellten Dichtungseinrichtung 35 entspricht das Steuerventil des zweiten Ausführungsbeispiels in seiner Funktionsweise vollständig und in seiner Konstruktion weitgehend dem Steuerventil des ersten Ausführungsbeispiels, so dass auf die dortigen Ausführungen verwiesen werden kann.

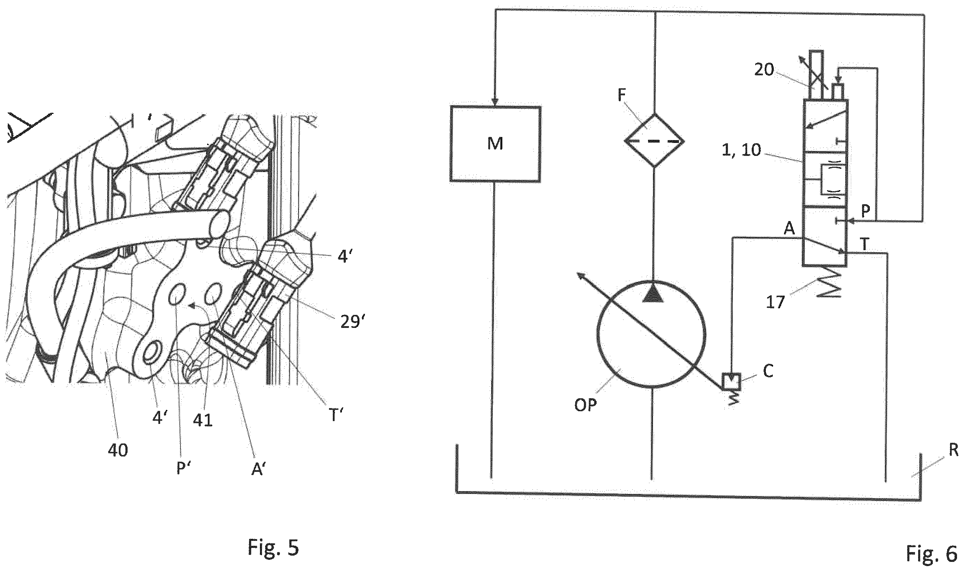

Figur 5 zeigt einen Einbauort für die Steuerventile der Ausführungsbeispiele. Die am Einbauort vorhandene Haltestruktur 40 kann beispielsweise eine Gehäusestruktur eines Antriebsmotors eines Fahrzeugs sein. An der Haltestruktur 40 ist eine freie äußere Anschlussgegenfläche 41 für das Steuerventil geformt. Der Anschlussflansch 2 der beiden Ausführungsbeispiele (Figuren 1 bis 4) ist an seiner Unterseite an die Anschlussgegenfläche 41 angepasst geformt, insbesondere ist die Anschlussfläche 3 der Ausführungsbeispiele an die Anschlussgegenfläche 41 angepasst geformt, so dass der Anschlussflansch 2 mit seiner Unterseite und insbesondere mit seiner Anschlussfläche 3 im montierten Zustand des Steuerventils in einem Flächenkontakt gleichmäßig an der Anschlussgegenfläche 41 anliegt. Wegen der in den Ausführungsbeispielen planen Unterseite des Anschlussflansches 2 ist auch die Anschlussgegenfläche 41 plan. An der Anschlussgegenfläche 41 münden ein Druckanschluss P', ein Arbeitsanschluss A' und ein Entlastungsanschluss T'. Im montierten Zustand liegen sich der Druckport P und der Anschlussport P' im Fügespalt von Anschlussfläche 3 und Anschlussgegenfläche 41 in gegenseitiger Überdeckung gegenüber. Des Weiteren liegen sich im montierten Zustand zum einen der Arbeitsport A und der Arbeitsanschluss A' und zum anderen der Entlastungsport T und der Entlastungsanschluss T' über den Fügespalt in gegenseitiger Überdeckung gegenüber. Die Dichtungseinrichtung 30 oder 35 dichtet die jeweilige Port-Anschluss-Verbindung P-P', A-A' und T-T' gegeneinander und gegen die äußere Umgebung ab.

In der Anschlussgegenfläche 41 sind Befestigungsgegenelemente 4' vorgesehen, ein Befestigungsgegenelement 4' für jeweils eines der Befestigungselemente 4'. Die Befestigungsgegenelemente 4' sind im montierten Zustand in Überdeckung mit jeweils einem der Befestigungselemente 4 des Steuerventils. Die Befestigungsgegenelemente 4' können insbesondere Bohrungen mit Innengewinde sein, so dass das jeweilige Steuerventil mittels Schraubverbindung gegen die Anschlussgegenfläche 41 spannbar ist.

Mit 29' ist ein mit dem Steuerungsanschluss 29 des Steuerventils verbindbarer Verbindungsanschluss bezeichnet. Bevorzugt handelt es sich um einen elektrischen Stecker zur Herstellung einer Steckverbindung mit dem Steuerungsanschluss 29.

Figur 6 zeigt ein Schaltungsschema für eine bevorzugte Verwendung des Steuerventils. Das Steuerventil, repräsentiert durch die Bezugszeichen 1, 10 für das Ventilgehäuse und den Ventilkolben, dient der gesteuerten Verstellung des Fördervolumens einer Schmierölpumpe OP. Die Schmierölpumpe OP kann beispielsweise eine Flügelzellenpumpe oder eine Zahnradpumpe sein. Zur Verstellung des Fördervolumens umfasst die Pumpe eine Verstelleinrichtung C mit einem beweglichen Stellglied, auf das in einer Stellkammer der Pumpe OP in die eine Richtung, beispielsweise in Richtung auf eine Verringerung des Fördervolumens, das von der Pumpe OP geförderte Druckfluid und dem Druckfluid entgegen eine rückstellende Federkraft wirken. Beispiele für geeignete Pumpen OP und Verstelleinrichtungen C sind aus den eingangs genannten Druckschriften EP 1 847 713 B1 und EP 3 103 960 A1 bekannt.

Die Pumpe OP saugt das Druckfluid, im angenommenen Verwendungsfall Schmieröl, aus einem Fluidreservoir R an und stößt es mit erhöhtem Druck an einem Pumpenauslass aus. Das Druckfluid wird in einem Filter F gereinigt und zur Hauptgalerie eines Verbrennungsmotors M gefördert, wo es zur Schmierung und/oder Kühlung von Motorkomponenten dient. Vom Motor M strömt das Druckfluid wieder zum Druckfluidreservoir R zurück. Vorteilhafterweise stromab vom Filter F und stromauf von der Motorhauptgalerie wird ein kleinerer Teilstrom des geförderten Druckfluids abgezweigt und zum Druckport P des Steuerventils 1, 10 geführt. Der Arbeitsport A des Steuerventils ist mit der Stellkammer der Verstelleinrichtung C verbunden. Der Entlastungsport T ist mit dem Fuidreservoir R verbunden.

In Figur 6 nimmt das Steuerventil 1, 10 die erste Kolbenposition ein. Entsprechend ist der Arbeitsport A mit dem Entlastungsport T verbunden. Die Stellkammer der Verstelleinrichtung C ist drucklos, d. h. sie liegt auf Umgebungsdruck. In diesem Ventilzustand ist das Fördervolumen der Pumpe OP maximal.

Ist in einem bestimmten Motorzustand, d. h. nach Motorlast und/oder Motortemperatur und/oder einem oder mehreren anderen Motorparametern, das Fördervolumen der Pumpe OP größer als für die Deckung des Bedarfs erforderlich oder optimal, steuert die Motorsteuerung das Steuerventil, d. h. deren Elektromagneteinrichtung 20 an, so dass die Elektromagneteinrichtung 20 über ihr Steuerorgan 23 (Figuren 1 und 3) den Ventilkolben 10 in Richtung auf die zweite Kolbenposition bewegt. Dabei wird die Elektromagneteinrichtung 20 durch den in der Ventilsteuerkammer 13 herrschenden Druck unterstützt. Nimmt der Ventilkolben 10 die zweite Kolbenposition ein, verbindet das Steuerventil den Druckport P mit dem Arbeitsport A, so dass der Förderdruck der Pumpe OP auch auf das Stellglied der Verstelleinrichtung C wirkt und bei Erreichen oder Überschreiten eines mittels der Verstelleinrichtung C vorgegebenen Grenzdrucks das Fördervolumen der Pumpe OP verringert wird.

Das Steuerventil ist als 3/3-Wegeventil mit Sperr-Mittelposition ausgeführt. Nimmt der Ventilkolben 10 die Mittelposition ein, sind sowohl der Druckport P als auch der Entlastungsport T jeweils mit beträchtlicher Drosselung mit dem Arbeitsport A verbunden. In diesem Ventilzustand stellt sich in der Stellkammer der Verstelleinrichtung C ein der Drosselwirkung des Steuerventils entsprechender Druck ein, der unter dem Förderdruck der Pumpe OP und über Umgebungsdruck liegt. Die Abregelung der Pumpe erfolgt in diesem Ventilzustand erst bei einem Förderdruck, der höher als der im vorstehenden Absatz genannte Grenzdruck bei in der zweiten Kolbenposition befindlichem Ventilkolben 10 ist.

Aufgrund der Flächendifferenz der Kolbenstirnflächen 11a und 12a (Figuren 1 und 3) erzeugt der in der Ventilsteuerkammer 13 herrschende Druck bei laufender Pumpe OP stets eine auf den Ventilkolben 10 der Ventilfeder 15 entgegenwirkende Druckkraft. Mit steigender Pumpengeschwindigkeit nimmt diese Druckkraft zu. Erreicht die Druckkraft einen Grenzwert, bewegt sich der Ventilkolben 10 auch ohne Einwirkung der Elektromagneteinrichtung 20 in die zweite Kolbenposition. Dies verleiht dem Steuerventil eine so genannte Fail-Safe-Eigenschaft, d. h. es erfolgt eines Abregelung des Fördervolumens auch bei Ausfall der Elektromagneteinrichtung 20 oder der vorgelagerten Motorsteuerung.

### Bezugszeichen:

- 1: Ventilgehäuse
- 2: Anschlussflansch
- 3: Anschlussfläche
- 4: Befestigungselement
- 4': Befestigungsgegenelement
- 5: Ventilraum
- 6: Ausbuchtung
- 7: Vertiefung
- 8: Vertiefung
- 9: Vertiefung
- 10: Ventilkolben
- 11: Kolbensteg
- 11a: Kolbenstirnfläche
- 12: Kolbensteg
- 12a: Kolbenstirnfläche
- 13: Ventilsteuerraum
- 14: Kolbenhohlraum
- 15: Ventilfeder
- 16: Verbindungskanal
- 17: Entlastungsraum
- 18: Filter
- 19: Hülse
- 20: Elektromagneteinrichtung
- 21: Spule
- 22: Anker
- 23: Steuerorgan
- 24: Führungsstruktur
- 25: Fügestruktur
- 26: Gehäusehülse
- 27: Abschlussdeckel
- 28: -
- 29: Steuerungsanschluss
- 30: Dichtungseinrichtung
- 31: Druckport-Dichtung
- 32: Arbeitsport-Dichtung
- 33: Entlastungsport-Dichtung
- 34: -
- 35: Dichtungseinrichtung
- 36: Druckport-Dichtung
- 37: Arbeitsport-Dichtung
- 38: Entlastungsport-Dichtung
- 39: -
- 40: Haltestruktur
- 41: Anschlussgegenfläche

- A: Arbeitsport
- A`: Arbeitsanschluss
- P: Druckport
- P`: Druckanschluss
- T: Entlastungsport
- T`: Entlastungsanschluss
- L: Längsachse
- C: Verstelleinrichtung
- F: Filter
- M: Motor
- OP: Pumpe
- R: Reservoir

## Patentansprüche

1. Steuerventil zur Steuerung einer Hydraulikeinrichtung, das Steuerventil umfassend:
1.1 ein Ventilgehäuse (1) mit einer Längsachse (L), einem axial erstreckten Ventilraum (5), einer Oberseite, die sich nur über einer durch den Ventilraum (5) erstreckten virtuellen Längsschnittebene erstreckt, und einer Unterseite, die sich nur unter dieser Längsschnittebene erstreckt,
1.2 einen im Ventilraum (5) axial zwischen einer ersten Kolbenposition und einer zweiten Kolbenposition hin und her beweglichen Ventilkolben (10),
1.3 einen Druckport (P) für die Zuführung eines Druckfluids in den Ventilraum (5),
1.4 einen Arbeitsport (A) zur Verbindung des Ventilraums (5) mit einer Verstelleinrichtung (C) der Hydraulikeinrichtung (OP),
1.5 einen Entlastungsport (T) zur Druckentlastung des Ventilraums (5) und
1.6 eine äußere Anschlussfläche (3) für den Anschluss des Steuerventils an eine Haltestruktur (40),
1.7 wobei der Druckport (P), der Arbeitsport (A) und der Entlastungsport (T) an der Unterseite des Steuerventils an der Anschlussfläche (3) münden, so dass das Steuerventil an der Unterseite über die Anschlussfläche (3) mit dem Druckfluid versorgbar, mit der Hydraulikeinrichtung (OP) verbindbar und im Druck entlastbar ist,
1.8 wobei der Ventilkolben (10) einen ersten Kolbensteg (11) und in axialem Abstand vom ersten Kolbensteg (11) einen zweiten Kolbensteg (12) aufweist, der erste Kolbensteg (11) einen Ventilsteuerraum (13) mit einer ersten Kolbenstirnfläche (11a) und der zweite Kolbensteg (12) den Ventilsteuerraum (13) mit einer zweiten Kolbenstirnfläche (12a) axial begrenzen und diese zwei Kolbenstirnflächen (11a, 12a) unterschiedlich groß sind, so dass das Druckfluid im Ventilsteuerraum (13) auf den Ventilkolben (10) einen resultierenden axialen Druck ausübt, wobei
1.9 im Ventilraum (5) in dem Axialabschnitt, der bei den Bewegungen des Ventilkolbens (10) vom zweiten Kolbensteg (12) überstrichen wird, eine Hülse (19) eingesetzt ist, die den Querschnitt des Ventilraums (5) im betreffenden Axialabschnitt verengt, **dadurch gekennzeichnet dass** die Hülse den Querschnitt des ventilraums im betreffenden Axialabschnitt so verengt dass sich der Verengung entsprechend am zweiten Kolbensteg (12) die im Vergleich zur gegenüberliegenden ersten Kolbenstirnfläche (11a) kleinere zweite Kolbenstirnfläche (12a) ergibt.

2. Steuerventil nach Anspruch 1, wobei die Anschlussfläche (3) zumindest im Wesentlichen plan ist.

3. Steuerventil nach einem der vorhergehenden Ansprüche, wobei sich der Arbeitsport (A), der Druckport (P) und der Entlastungsport (T) in einem Längsschnitt des Steuerventils von der Anschlussfläche (3) bis in den Ventilraum (5) nebeneinander erstrecken.

4. Steuerventil nach einem der vorhergehenden Ansprüche, wobei das Steuerventil mit der Unterseite des Ventilgehäuses (1) an die Haltestruktur (40) seitlich anlegbar und an der Haltestruktur (40) befestigbar ist.

5. Steuerventil nach einem der vorhergehenden Ansprüche, wobei das Ventilgehäuse (1) einen Anschlussflansch (2) umfasst, vorzugsweise mit dem Anschlussflansch (2) geformt ist, und sich die Anschlussfläche (3) an der vom Ventilraum (5) wegweisenden Unterseite des Anschlussflansches (2) erstreckt.

6. Steuerventil nach einem der vorhergehenden Ansprüche, wobei das Ventilgehäuse (1) ein oder mehrere Befestigungselemente (4) für eine Befestigung an der Haltestruktur (40) mit einer zumindest im Wesentlichen radialen Spannkraft umfasst.

7. Steuerventil nach den zwei unmittelbar vorhergehenden Ansprüchen, wobei der Anschlussflansch (2) das jeweilige Befestigungselement (4) aufweist.

8. Steuerventil nach einem der vorhergehenden Ansprüche, umfassend eine Dichtungseinrichtung (30; 35), die die Ports (P, A, T) an der Anschlussfläche (3) umgibt, um die Ports (P, A, T) an der Anschlussfläche (3) voneinander und von der externen Umgebung des Steuerventils zu trennen.

9. Steuerventil nach dem vorhergehenden Anspruch, wobei die Dichtungseinrichtung (30; 35) eine den Druckport (P) umgebende Druckport-Dichtung (31; 36), eine den Arbeitsport (A) umgebende Arbeitsport-Dichtung (32; 37) und eine den Entlastungsport (T) umgebende Entlastungsport-Dichtung (33; 38) aufweist, um den jeweiligen Port (P, A, T) an der Anschlussfläche (3) abzudichten, und wobei wenigstens zwei der Dichtungen (36, 37,38), vorzugsweise alle drei Dichtungen (36, 37, 38), in einem Stück zusammenhängen und eine Dichtungseinheit (35) bilden.

10. Steuerventil nach einem der vorhergehenden Ansprüche, wobei in der Anschlussfläche (3) um den Druckport (P) eine Vertiefung (7) zur Aufnahme einer Druckport-Dichtung (31; 36) und/oder um den Arbeitsport (A) eine Vertiefung (8) zur Aufnahme einer Arbeitsport-Dichtung (32; 37) und/oder um den Entlastungsport (T) eine Vertiefung (9) zur Aufnahme einer Entlastungsport-Dichtung (33; 38) angeordnet ist/sind, um den jeweiligen Port (P, A, T) an der Anschlussfläche (3) abzudichten.

11. Steuerventil nach einem der vorhergehenden Ansprüche, wobei der Arbeitsport (A) in der ersten Kolbenposition mit dem Entlastungsport (T) verbunden und vom Druckport (P) getrennt und/oder in der zweiten Kolbenposition mit dem Druckport (P) verbunden und vom Entlastungsport (T) getrennt ist.

12. Steuerventil nach einem der vorhergehenden Ansprüche, umfassend eine Feder (17), die den Ventilkolben (10) mit Federkraft in Richtung auf die erste Kolbenposition spannt.

13. Steuerventil nach einem der vorhergehenden Ansprüche, wobei der Ventilkolben (10) eine resultierende Kolbenwirkfläche (11a - 12a) für das Druckfluid aufweist, die so ausgerichtet ist, dass das Druckfluid der Federkraft entgegen auf die resultierende Kolbenwirkfläche (11a - 12a) wirkt.

14. Steuerventil nach einem der vorhergehenden Ansprüche in Kombination mit der Haltestruktur (40), die eine Anschlussgegenfläche (41) für die Anschlussfläche (3) aufweist, wobei an der Anschlussgegenfläche (41) ein Druckanschluss (A') für den Druckport (P), ein Arbeitsanschluss (A') für den Arbeitsport (A) und ein Entlastungsanschluss (T`) für den Entlastungssport (T) münden und das Steuerventil an der Haltestruktur (40) montiert oder montierbar ist, so dass die Anschlussfläche (3) der Anschlussgegenfläche (41) radial zugewandt und die Ports (P, A, T) des Steuerventils in die Anschlüsse (P`, A', T`) der Haltestruktur (40) münden.

15. Steuerventil nach einem der vorhergehenden Ansprüche, wobei die Hydraulikeinrichtung (OP) eine im Fördervolumen verstellbare Pumpe (OP) mit einer integrierten Verstelleinrichtung (C) ist und die Verstelleinrichtung (C) der Verstellung des Fördervolumens der Pumpe (OP) dient.

## Claims

1. A control valve for controlling a hydraulic device, the control valve comprising:
1.1 a valve housing (1) having a longitudinal axis (L), an axially extending valve space (5), an upper side which only extends above a virtual longitudinal sectional plane extending through the valve space (5), and a lower side which only extends below this longitudinal sectional plane;
1.2 a valve piston (10) which can be moved axially back and forth in the valve space (5) between a first piston position and a second piston position;
1.3 a pressure port (P) for supplying a pressure fluid into the valve space (5);
1.4 a working port (A) for connecting the valve space (5) to an adjusting device (C) of the hydraulic device (OP);
1.5 a relief port (T) for relieving pressure on the valve space (5); and
1.6 an outer attaching surface (3) for attaching the control valve to a holding structure (40),
1.7 wherein the pressure port (P), the working port (A) and the relief port (T) emerge at the attaching surface (3) on the lower side of the control valve, such that the control valve can be supplied with the pressure fluid, connected to the hydraulic device (OP) and relieved of pressure via the attaching surface (3) on the lower side,
1.8 wherein the valve piston (10) has a first piston stay (11) and a second piston stay (12) at an axial distance from the first piston stay (11), a first end-facing surface (11a) of the first piston stay (11) and a second end-facing surface (12a) of the second piston stay (12) axially delineate a valve control space (13), and said two piston end-facing surfaces (11a, 12a) differ in size, such that the pressure fluid in the valve control space (13) exerts a resultant axial pressure on the valve piston (10),
1.9 wherein in the axial portion of the valve space (5) which the second piston stay (12) passes over during the movements of the valve piston (10), a sleeve (19) is inserted which constricts the cross-section of the valve space (5) in the axial portion in question, **characterised in that** the sleeve (19) constricts the cross-section of the valve space (5) in the axial portion in question such that the second end-facing surface (12a) of the piston which is smaller than the opposing first end-facing surface (11a) of the piston is produced on the second piston stay (12) in accordance with the constriction.

2. The control valve according to claim 1, wherein the attaching surface (3) is at least substantially flat.

3. The control valve according to any one of the preceding claims, wherein the working port (A), the pressure port (P) and the relief port (T) extend next to each other in a longitudinal section of the control valve from the attaching surface (3) up to and into the valve space (5).

4. The control valve according to any one of the preceding claims, wherein the lower side of the valve housing (1) of the control valve can be placed laterally onto the holding structure (40) and fastened to the holding structure (40).

5. The control valve according to any one of the preceding claims, wherein the valve housing (1) comprises an attaching flange (2) and is preferably formed together with the attaching flange (2), and the attaching surface (3) extends on the lower side of the attaching flange (2) which points away from the valve space (5).

6. The control valve according to any one of the preceding claims, wherein the valve housing (1) comprises one or more fastening elements (4) for fastening to the holding structure (40) with an at least substantially radial tensing force.

7. The control valve according to the two immediately preceding claims, wherein the attaching flange (2) has the respective fastening element (4).

8. The control valve according to any one of the preceding claims, comprising a gasket device (30; 35) which surrounds the ports (P, A, T) on the attaching surface (3) in order to separate the ports (P, A, T) on the attaching surface (3) from each other and from the external environment of the control valve.

9. The control valve according to the preceding claim, wherein the gasket device (30; 35) has a pressure port gasket (31; 36) which surrounds the pressure port (P), a working port gasket (32; 37) which surrounds the working port (A), and a relief port gasket (33; 38) which surrounds the relief port (T) in order to seal off the respective port (P, A, T) on the attaching surface (3), and wherein at least two and preferably all three of the gaskets (36, 37, 38) are contiguous in one piece and form a gasket unit (35).

10. The control valve according to any one of the preceding claims, wherein a recess (7) for accommodating a pressure port gasket (31; 36) is arranged around the pressure port (P) and/or a recess (8) for accommodating a working port gasket (32; 37) is arranged around the working port (A) and/or a recess (9) for accommodating a relief port gasket (33; 38) is arranged around the relief port (T) in the attaching surface (3), in order to seal off the respective port (P, A, T) on the attaching surface (3).

11. The control valve according to any one of the preceding claims, wherein the working port (A) is connected to the relief port (T) and separated from the pressure port (P) in the first piston position and/or connected to the pressure port (P) and separated from the relief port (T) in the second piston position.

12. The control valve according to any one of the preceding claims, comprising a spring (15) which tenses the valve piston (10) with a spring force in the direction of the first piston position.

13. The control valve according to any one of the preceding claims, wherein the valve piston (10) has a resultant effective surface (11a - 12a) of the piston for the pressure fluid, which is aligned such that the pressure fluid acts on the resultant effective surface (11a - 12a) of the piston, counter to the spring force.

14. The control valve according to any one of the preceding claims in combination with the holding structure (40) which has an attaching surface (41) which is complementary to the attaching surface (3), wherein a pressure connector (P`) for the pressure port (P), a working connector (A`) for the working port (A) and a relief connector (T`) for the relief port (T) emerge at the complementary attaching surface (41), and the control valve is or can be fitted on the holding structure (40) such that the attaching surface (3) radially faces the complementary attaching surface (41), and the ports (P, A, T) of the control valve emerge into the connectors (P`, A', T`) of the holding structure (40).

15. The control valve according to any one of the preceding claims, wherein the hydraulic device (OP) is a pump (OP) which can be adjusted in terms of its delivery volume and which has an integrated adjusting device (C) which serves to adjust the delivery volume of the pump (OP).

## Revendications

1. Soupape de commande pour commander un dispositif hydraulique, la soupape de commande comprenant :
1.1 un boîtier de soupape (1) présentant un axe longitudinal (L), un espace de soupape (5) s'étendant axialement, une face supérieure qui ne s'étend qu'au-dessus d'un plan de section longitudinale virtuel s'étendant à travers l'espace de soupape (5), et une face inférieure qui ne s'étend qu'au-dessous de ce plan de section longitudinale ;
1.2 un piston de soupape (10) déplaçable axialement en va-et-vient dans l'espace de soupape (5) entre une première position de piston et une seconde position de piston ;
1.3 un orifice de pression (P) pour alimenter un fluide sous pression dans l'espace de soupape (5) ;
1.4 un orifice de travail (A) pour relier l'espace de soupape (5) à un dispositif de réglage (C) du dispositif hydraulique (OP) ;
1.5 un orifice de décharge (T) pour décompresser l'espace de soupape (5) ; et
1.6 une surface de raccordement extérieure (3) pour raccorder la soupape de commande à une structure de maintien (40),
1.7 l'orifice de pression (P), l'orifice de travail (A) et l'orifice de décharge (T) situés sur la face inférieure de la soupape de commande débouchant sur la surface de raccordement (3), de sorte que la soupape de commande située sur la face inférieure peut être alimentée en fluide sous pression, reliée au dispositif hydraulique (OP) et décompressée par l'intermédiaire de la surface de raccordement (3),
1.8 le piston de soupape (10) comportant une première traverse de piston (11) et une seconde traverse de piston (12) à une distance axiale de la première traverse de piston (11), une première surface frontale (11a) de la première traverse de piston (11) et une seconde surface frontale (12a) de la seconde traverse de piston (12) délimitant axialement l'espace de commande de soupape (13), ces deux surfaces frontales de piston (11a, 12a) étant de dimensions différentes, de sorte que le fluide sous pression dans l'espace de commande de soupape (13) exerce sur le piston de soupape (10) une pression axiale résultante,
1.9 un manchon (19) est inséré dans la partie axiale de l'espace de soupape (5) balayée par la seconde traverse de piston (12) pendant les mouvements du piston de soupape (10), le manchon (19) rétrécissant la section transversale de l'espace de soupape (5) dans ladite partie axiale, **caractérisé en ce que** le manchon (19) rétrécit la section transversale de l'espace de soupape (5) dans ladite partie axiale de sorte que la seconde surface frontale (12a), qui est plus petite que la première surface frontale opposée (11a), résulte sur la seconde traverse de piston (12) en fonction du rétrécissement.

2. Soupape de commande selon la revendication 1, dans laquelle la surface de raccordement (3) est au moins essentiellement plate.

3. Soupape de commande selon l'une quelconque des revendications précédentes, dans laquelle l'orifice de travail (A), l'orifice de pression (P) et l'orifice de décharge (T) s'étendent côte à côte depuis la surface de raccordement (3) jusqu'à l'intérieur de l'espace de soupape (5) dans une section longitudinale de la soupape de commande.

4. Soupape de commande selon l'une quelconque des revendications précédentes, dans laquelle la face inférieure du boîtier de soupape (1) de la soupape de commande peut être placée latéralement contre la structure de maintien (40) et fixée à la structure de maintien (40).

5. Soupape de commande selon l'une quelconque des revendications précédentes, dans laquelle le boîtier de soupape (1) comprend une bride de raccordement (2) et est de préférence formé avec la bride de raccordement (2), la surface de raccordement (3) s'étendant sur la face inférieure de la bride de raccordement (2) détournée de l'espace de soupape (5).

6. Soupape de commande selon l'une quelconque des revendications précédentes, dans laquelle le boîtier de soupape (1) comprend un ou plusieurs éléments de fixation (4) pour la fixation à la structure de maintien (40) avec une force de serrage au moins essentiellement radiale.

7. Soupape de commande selon les deux revendications immédiatement précédentes, dans laquelle la bride de raccordement (2) comporte l'élément de fixation (4) respectif.

8. Soupape de commande selon l'une quelconque des revendications précédentes, comprenant un dispositif d'étanchéité (30 ; 35) entourant les orifices (P, A, T) situés sur la surface de raccordement (3) pour séparer les orifices (P, A, T) situés sur la surface de raccordement (3) l'un de l'autre et de l'environnement extérieur de la soupape de commande.

9. Soupape de commande selon la revendication précédente, dans laquelle le dispositif d'étanchéité (30 ; 35) comporte un joint d'étanchéité d'orifice de pression (31 ; 36) entourant l'orifice de pression (P), un joint d'étanchéité d'orifice de travail (32 ; 37) entourant l'orifice de travail (A) et un joint d'étanchéité d'orifice de décharge (33 ; 38) entourant l'orifice de décharge (T) pour étancher l'orifice respectif (P, A, T) situé sur la surface de raccordement (3), au moins deux des joints d'étanchéité (36, 37, 38) et de préférence tous les trois joints d'étanchéité (36, 37, 38) étant cohérents en une seule pièce et formant une unité d'étanchéité (35).

10. Soupape de commande selon l'une quelconque des revendications précédentes, dans laquelle une cavité (7) pour recevoir un joint d'étanchéité d'orifice de pression (31 ; 36) est disposée autour de l'orifice de pression (P) et / ou une cavité (8) pour recevoir un joint d'étanchéité d'orifice de travail (32 ; 37) est disposée autour de l'orifice de travail (A) et / ou une cavité (9) pour recevoir un joint d'étanchéité d'orifice de décharge (33 ; 38) est disposée autour de l'orifice de décharge (T) dans la surface de raccordement (3) afin d'étancher le port respectif (P, A, T) situé sur la surface de raccordement (3).

11. Soupape de commande selon l'une quelconque des revendications précédentes, dans laquelle l'orifice de travail (A) est relié à l'orifice de décharge (T) et séparé de l'orifice de pression (P) dans la première position de piston et / ou relié à l'orifice de pression (P) et séparé de l'orifice de décharge (T) dans la seconde position de piston.

12. Soupape de commande selon l'une quelconque des revendications précédentes, comprenant un ressort (15) serrant le piston de soupape (10) avec une force de ressort vers la première position de piston.

13. Soupape de commande selon l'une quelconque des revendications précédentes, dans laquelle le piston de soupape (10) comporte une surface d'action de piston résultante (11a - 12a) pour le fluide sous pression, qui est orientée de sorte que le fluide sous pression agit sur la surface d'action de piston résultante (11a - 12a) à l'encontre de la force de ressort.

14. Soupape de commande selon l'une quelconque des revendications précédentes, en combinaison avec la structure de maintien (40) qui comporte une surface de raccordement (41) complémentaire à la surface de raccordement (3), un raccord de pression (P`) pour l'orifice de pression (P), un raccord de travail (A`) pour l'orifice de travail (A) et un raccord de décharge (T`) pour l'orifice de décharge (T) débouchant sur la surface de raccordement complémentaire (41), la soupape de commande étant ou pouvant être montée sur la structure de maintien (40), de sorte que la surface de raccordement (3) fait face radialement à la surface de raccordement complémentaire (41) et les orifices (P, A, T) de la soupape de commande débouchent dans les raccords (P`, A', T') de la structure de maintien (40).

15. Soupape de commande selon l'une quelconque des revendications précédentes, dans laquelle le dispositif hydraulique (OP) est une pompe (OP) à volume de refoulement réglable comportant un dispositif de réglage (C) intégré et utilisé pour régler le volume de refoulement de la pompe (OP).
